# EUROPEAN PATENT SPECIFICATION

(11) **EP 2 976 922 B1**
(45) Date of publication and mention of the grant of the patent: **17.06.2020**
(21) Application number: 13878877.3
(22) Date of filing: 19.03.2013
(51) Int. Cl.: H04J 3/06, H04W 56/00, H04L 12/46

(54) **PROVIDING PACKET SYNCHRONIZATION IN A VIRTUAL PRIVATE NETWORK**
BEREITSTELLUNG EINER PAKETSYNCHRONISATION IN EINEM VIRTUELLEN PRIVATEN NETZWERK
FOURNITURE D'UNE SYNCHRONISATION DE PAQUETS DANS UN RÉSEAU PRIVÉ VIRTUEL

(43) Date of publication of application: 27.01.2016
(73) Proprietor: Telefonaktiebolaget LM Ericsson (publ), 164 83 Stockholm (SE)
(72) Inventor: ZHAO, Zhengfu, Beijing 100102 (CN)
(74) Representative: Zacco Sweden AB
(86) International application number: PCT/CN2013/072838
(87) International publication number: WO 2014/146239

(56) References cited:
- EP-A1- 2 472 916
- WO-A1-2011/074529
- CN-A- 101 958 743
- US-A1- 2010 074 278
- MAGEE A: "Synchronization in next-generation mobile backhaul networks", IEEE COMMUNICATIONS MAGAZINE, IEEE SERVICE CENTER, PISCATAWAY, US, vol. 48, no. 10, 1 October 2010 (2010-10-01), pages 110-116, XP011319414, ISSN: 0163-6804
- DINH THAI BUI ET AL: "Protocol agnostic On-Path Supports", PRECISION CLOCK SYNCHRONIZATION FOR MEASUREMENT CONTROL AND COMMUNICATION (ISPCS), 2010 INTERNATIONAL IEEE SYMPOSIUM ON, IEEE, PISCATAWAY, NJ, USA, 27 September 2010 (2010-09-27), pages 129-134, XP031780882, ISBN: 978-1-4244-5978-0
- "Mobile Backhaul Implementation Agreement Phase 2 APPROVED DRAFT 2 Oct 27, 2010", ITU-T DRAFT ; STUDY PERIOD 2009-2012, INTERNATIONAL TELECOMMUNICATION UNION, 8 December 2010 (2010-12-08), pages 1-73, XP044040826, GENEVA ; CH [retrieved on 2010-12-08]
- RAD DATA COMMUNICATIONS LTD.: 'LTE Backhaul: Meeting Operator Requirements' 31 December 2009, XP055222582 Retrieved from the Internet: <URL:http://www.mforum.ru/arc/091118 _LTE _Backhaul_WP.pdf>
- "A White Paper by the NGMN Alliance LTE Backhauling Deployment Scenarios", , 3 July 2011 (2011-07-03), pages 1-33, XP055206883, Retrieved from the Internet: URL:http://www.ngmn.org/uploads/media/NGMN _Whitepaper_LTE_Backhauling_Deployment_Sce narios_01.pdf [retrieved on 2015-08-07]
- Eitan Schwartz: "White Paper - Mobile Backhaul Challenges and Opportunities", , 31 December 2008 (2008-12-31), pages 1-23, XP055411877, Retrieved from the Internet: URL:http://www.ndc.fi/wp-content/uploads/2 015/04/6024_Mobile_Backhaul.pdf [retrieved on 2017-10-02]
- METRO ETHERNET FORUM: "Liaison Statement for MEF Mobile Backhaul Project to ITU-T Study Group 15 Question 13;TD 455 (WP3/15)", ITU-T DRAFT ; STUDY PERIOD 2005-2008, INTERNATIONAL TELECOMMUNICATION UNION, GENEVA ; CH, vol. 13/15, 21 September 2007 (2007-09-21) , pages 1-4, XP017527202, [retrieved on 2007-09-21]

## Description

### TECHNICAL FIELD

The invention relates to the field of providing packet synchronization in a Virtual Private Network.

### BACKGROUND

Alternative Access Vendor (AAV) networks are used widely in some countries in Mobile Backhaul transport. The backhaul portion of a communications network includes intermediate links between the core (or backbone) network and smaller subnetworks at the edge of the communications network. AAV providers provide data carrying bandwidth that can be rented or purchased by a Service Provider for communicating between the core network and an end user. The AAV provider usually uses a Virtual Private Network (VPN), typically L3VPN, L2VPN or L1VPN, to service several different Service Providers.

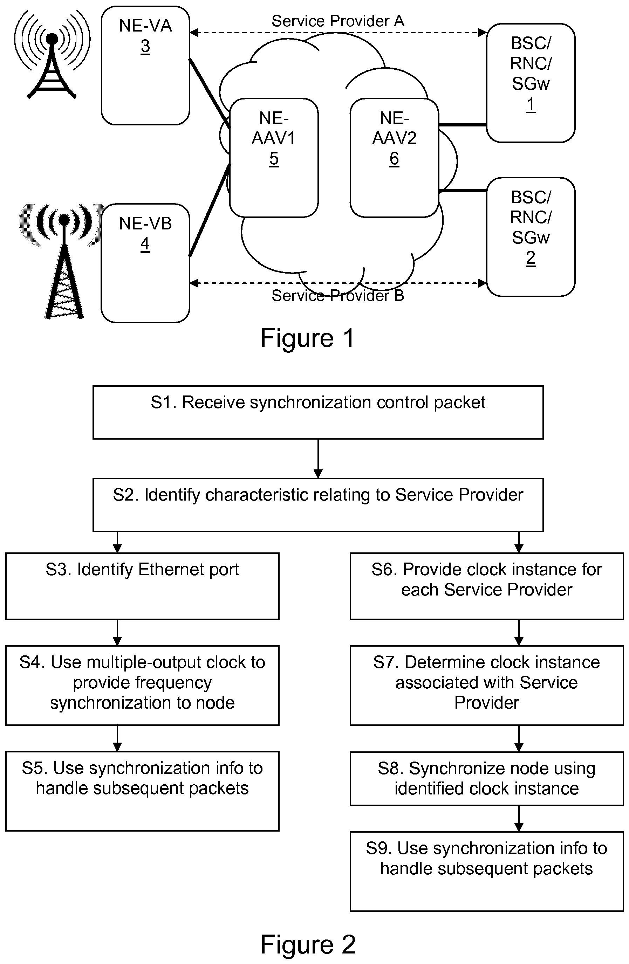

Figure 1 illustrates schematically an exemplary network in which Service Provider A and Service Provider B have core network elements (NE) 1 and 2 respectively. Examples of such core network elements include Base Station Controller (BSC), Radio Network Controllers (RNC) and Serving Gateways (SGw). Service Providers A and B provide service to end users via access network elements 3 and 4 respectively. Both Service Provider A and Service Provider B obtain AAV mobile backhaul from network elements 5 and 6.

The mobile backhaul network has to handle packet networks. The packet network must provide frequency, phase and/or time synchronization for the Radio Access Network (RAN) for different application cases. This is defined, in, for example, ITU-T G.8271/Y.1366, "Time and phase synchronization aspects of packet networks", which defines the "time and phase synchronization aspects of packet networks" with the performance requirements from different RANs.

In the AAV networking scenario illustrated in Figure 1, Service Provider A and Service Provider B typically require a different frequency, time and phase synchronization from the Mobile Backhaul transport. In an AAV scenario, the AAV network is the packet network carrier providing a VPN service for the Service Providers. The frequency, time and phase synchronization from packet based synchronization is heavily impacted by jitter (delay variant) and delay of the packet network.

In an attempt to guarantee accuracy of frequency, time and/or phase synchronization, packet synchronization frames passing through the AAV network are assigned the highest Quality of Service (QoS) value with sufficient bandwidth. Time stamping information for end to end packets is not handled by intermediate AAV nodes because the AAV network would need to supply several different Service Providers with different time stamps if those Service Providers have different clock domains. In this case, larger frame sizes mixed with the synchronization frames would introduce unacceptable levels of jitter into the AAV network, especially if there are multiple hops between nodes within the AAV network. AAV nodes can therefore only provide frequency, time and phase synchronization for use by other nodes within the AAV network (the jitter from jumbo frames also has impact on AAV node-self synchronization accuracy if the network Quality-of-Service (QoS) is not adequately planned), and cannot provide frequency, time and phase synchronization for use by nodes in the core network or at the other end of the communications network.

Examples of prior arts may be found in document "A White paper by the NGMN Alliance LTE Backhauling Deployment Scenarios", 3 July 2011 that discusses LTE backhauling. US 2010/074278 A1 relate to synchronizing clocks located on a network element. It discloses a network element that synchronizes a number of clocks within the system while supporting multiple independent timing domains.

### SUMMARY

The invention is defined by the independent claims. Embodiments of the invention are defined by the dependent claims. It is an object to provide mechanisms by which the mobile backhaul network can provide packet synchronization in a Virtual Private Network. According to a first aspect, there is provided a method of providing packet synchronization in a Virtual Private Network. A node that provides backhaul service to a plurality of Service Providers in the Virtual Private Network receives a synchronization control packet. It identifies a characteristic relating to the identity of a Service Provider of the plurality of Service Providers, and provides synchronization information to the node on the basis of the identified characteristic. Subsequent packets associated with the identified Service Provider are handled using the synchronization information. This has the advantage that a single node providing synchronization in the backhaul can be synchronize according to the requirements and synchronization of different Service Providers.

As an option, the packet synchronization comprises frequency synchronization, in which case a multiple output clock is used, each output providing frequency synchronization according to the identified characteristic of the Service Provider. As a further option, the step of identifying the characteristic relating to the identity of the Service Provider comprises identifying an Ethernet port at which the synchronization control packet was received. This requires very little processing to identify the Service Provider.

The method optionally comprises, for each Service Provider of the plurality of service Providers, providing a packet time engine instance, each packet time engine instance arranged to provide time and phase synchronization specific to the Service Provider. As a further option, for the synchronization control packet, the Service Provider associated with the synchronization control packet is identified. The packet time engine instance associated with the identified Service Provider is identified. The time and/or phase data from the packet time engine instance is then used to synchronize the node.

As a further option, the method is performed on a vessel or a vehicle.

According to a second aspect, there is provided a node for providing packet synchronization in a Virtual Private Network providing backhaul service to a plurality of Service Providers. The node is provided with a receiver arranged to receive a synchronization control packet and a processor arranged to identify a characteristic relating to the identity of a Service Provider of the plurality of Service Providers. The processor is further arranged to provide synchronization information on the basis of the identified characteristic, and the processor is also arranged to handle subsequent packets associated with the identified Service Provider using the synchronization information. This allows the node to provide synchronization to packets depending on the identity of the Service Provider associated with the packets.

As an option, the packet synchronization comprises frequency synchronization, in which case the node is provided with a multiple output clock, each output arranged to provide frequency synchronization according to the identified characteristic of the Service Provider. As a further option, the processor is arranged to identify the characteristic relating to the identity of the Service Provider by identifying an Ethernet port at which the synchronization control packet was received.

As an option, the node is provided with a plurality of packet time engine instances. Each packet time engine instance is associated with a Service Provider, and is arranged to provide time and phase data specific to the associated Service Provider. As a further option, the processor is also arranged to identify the Service Provider associated with the synchronization control packet, determine the packet time engine instance associated with the identified Service Provider, and use any of the time and phase data from the clock instance to synchronize the node.

The node optionally comprises any of a router node and a switch node.

According to a third aspect, there is provided a computer program that comprises computer readable code which, when run on a node in a communications network, causes the node to perform the method as described above in the first aspect.

According to a fourth aspect, there is provided a computer program product comprising a non-transitory computer readable medium and a computer program which, when run on a node in a communications network, causes the node to perform the method as described above in the first aspect, wherein the computer program is stored on the computer readable medium.

According to a fifth aspect, there is provided a vessel or vehicle comprising the node as described above in the second aspect.

### BRIEF DESCRIPTION OF DRAWINGS

Figure 1 illustrates schematically in a block diagram an exemplary network architecture for a mobile backhaul network;
Figure 2 is a flow diagram showing exemplary steps for providing synchronization
Figure 3 illustrates schematically in a block diagram exemplary functions for providing frequency synchronization;
Figure 4 illustrates schematically in a block diagram exemplary functions for providing time/phase synchronization;
Figure 5 illustrates schematically in a block diagram an exemplary Packet Time Engine;
Figure 6 illustrates schematically in a block diagram an exemplary node according to an embodiment;
Figure 7 illustrates schematically in a block diagram an exemplary network architecture for a mobile backhaul network using a synchronization node; and
Figure 8 illustrates schematically in a block diagram an exemplary vehicle or vessel.

### DETAILED DESCRIPTION

The concept of Virtual Private Synchronization (VPS) is introduced herein, in which packet synchronization is provided in a Virtual Private Network (VPN) of an Alternative Access Vendor (AAV) network. Different synchronization values can be provide to different packets depending on the Service Provider that is handling the packets, even where the AAV provides mobile backhaul services to several Service Providers. In legacy transport networks, there is no need to provide multiple L1 physical synchronization domains per network element (NE) or node, as all nodes can work when synchronized to a single clock source. However, with packet networks for the mobile backhaul or IP RAN, there is a need to provide frequency synchronization for different Service Providers through the AAV network. In addition, time and phase synchronization must also be provided to the node from the transport layer. There is a need to have multiple time/phase synchronization domains per node for multiple Service Providers.

Methods and apparatus are described that allow for frequency synchronization in an AAV network, time/phase synchronization in the AAV network, and a combination of frequency, time and phase synchronization.

Note that a node in the backhaul network that is responsible for packet synchronization such as an AAV node is itself synchronized using synchronization control packets. In a specific embodiment, VPS silicon blocks are synchronized to ensure that they have the correct frequency, time and phase synchronization from the synchronization control packet. Packets subsequently handled by the node can then be synchronized by, for example, time stamping, or control frames sent to downstream nodes can be synchronized. In general, a synchronization control packet synchronizes the node, and the node subsequently uses its synchronized time/phase and/or frequency values to synchronize subsequent packets that it handles.

Figure 2 is a flow diagram illustrating steps of embodiments. The following numbering corresponds to that of Figure 2.
S1. A node that provides backhaul service to a plurality of Service Providers in a VPN receives a synchronization control packet.
S2. A characteristic relating to the identity of one of the Service Providers is identified. This may be, for example, a port on which the synchronization control packet was received, or header information, depending on embodiments used as described below.
S3. In the case where frequency synchronization is required, an identity of the Service Provider can be determined by identifying an Ethernet port on which the frequency clock was selected from and/or the synchronization control packet was received.
S4. A multiple output clock is used to provide frequency synchronization to the node depending on the identity of the Ethernet port on which the frequency clock was selected from and/or the synchronization control packet was received.
S5. Subsequent packets that are associated with the identified Service Provider are handled using the synchronization information.
S6. In the case where time/phase synchronization is required, a separate clock instance is provided for each Service Provider for which the node handles packets.
S7. The identity of the Service Provider is used to determine which clock instance is associated with the Service Provider that is handling the packet.
S8. The node is provided with time/frequency synchronization using the clock instance associated with the Service Provider.
S9. Subsequent packets that are associated with the identified Service Provider are handled using the synchronization information.

Note that steps S3-S4 and S6-S8 are not incompatible. The same node can provide either frequency synchronization, time/phase synchronization, or both frequency and time/phase synchronization.

The steps described above will now be discussed in more detail. The multiple L1 physical synchronization domain is referred to herein as a frequency Virtual Private Synchronization domain. The multiple time/phase domain per network element (NE) is referred to herein as a time/phase Virtual Private Synchronization domain.

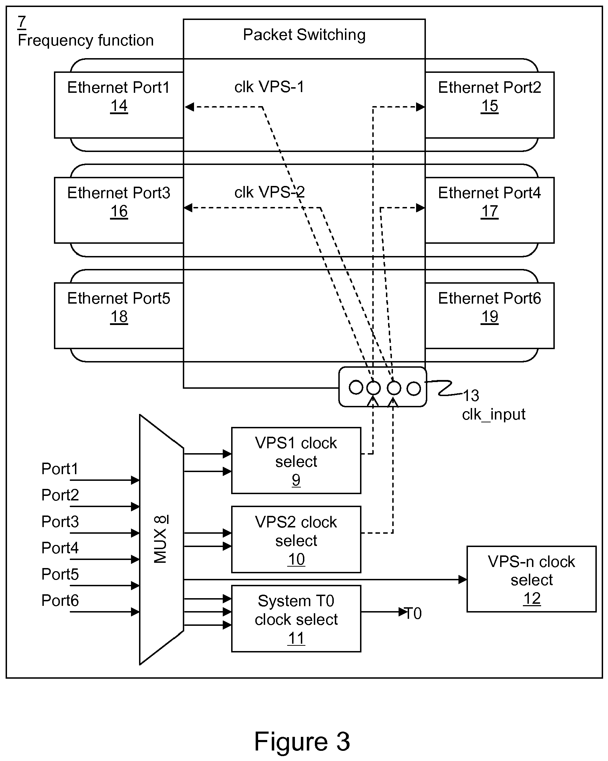

Considering frequency Virtual Private Synchronization for providing frequency synchronization in an AAV node, Figure 3 shows a frequency VPS function 7. The frequency function is provided with a multiple output clock multiplexer (MUX) 8 that receives inputs from different Ethernet ports (in this example, Ports 1 to 6). The MUX 8 allocates and assigns different frequency sources to different clock select blocks. In this example, VPS1 clock select block 9 and VPS2 clock select block 10 are shown. A system TO clock select block 11 is provided that is a legacy standard function currently used to ensure backwards compatibility with legacy networks. VPS-n clock select block 12 is also illustrated. The clock loop avoidance is needed when selecting the right inputs to each VPS, similar to existing clock loop avoidance technology.

The VPS clock select blocks 9, 10 feed into a clock input 13 which in turn feeds into the six Ethernet ports 14-19 illustrated. In this example, VPS1 clock select block 9 and VPS2 clock select block 10 have a frequency output that is used to drive corresponding VPS ports. For example, VPS1 clock select block 9 drives the frequency of Ethernet Port 1 and Port 2, and VPS2 clock select block 10 drives the frequency of Ethernet Ports 3 and Port 4.

Each VPS clock select block 9, 10 may be used for one Service Provider that uses the AAV backhaul network. For example, VPS1 clock select block 9 may be used for Service Provider A and VPS2 clock select block 10 may be used for Service Provider B. In this way, the Service Provider can be identified by the port on which on which the frequency clock was selected from and/or a synchronization control packet is received.

The number of the VPS clock select blocks supported by a node is typically determined by the system parameters design. The example of two VPS clock select blocks 9, 10 and one system TO clock 11 is shown in Figure 3. It should be noted that the number of the VPS clock select blocks will typically be in the range of 1 to 16, although fewer VPS clock select blocks reduces the complexity of the node.

Note that the example of Figure 3 is with reference to Ethernet frequency synchronization. However, the same concepts can be equally applied to L1 physical synchronization in networks that use plesiochronous digital hierarchy (PDH), Synchronous Digital Hierarchy (SDH), Synchronous Optical Networking (SONET), Optical Transport Network (OTN) technology and so on

The clock select blocks 9, 10 may derive their frequencies from a high precision, free running Oven Controlled Crystal Oscillator (OCXO) driven clock source or another type of clock source such as Ethernet Port1 to Ethernet Port6 of the synchronization Ethernet.

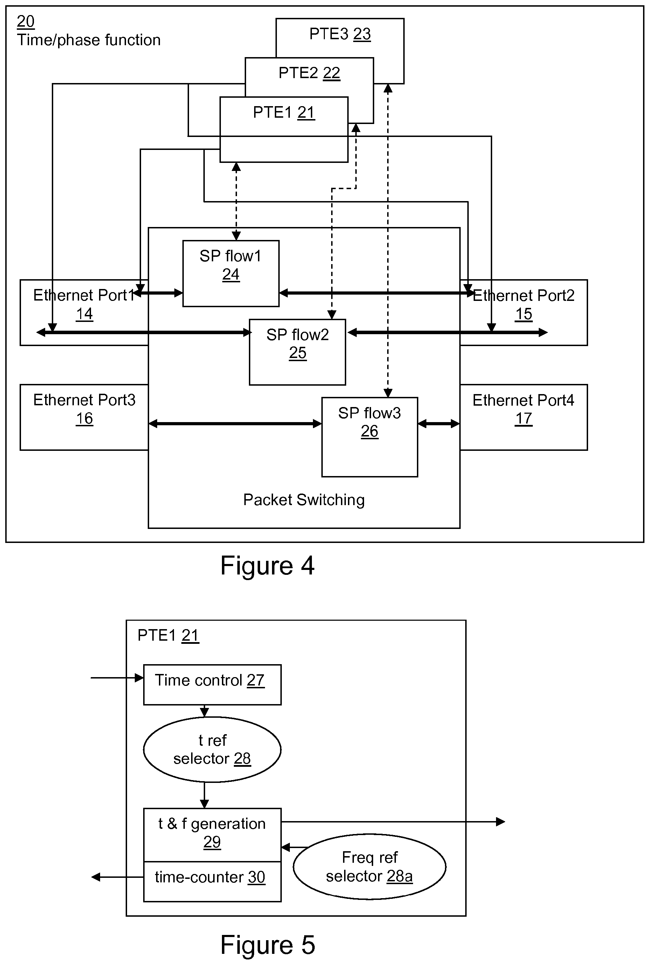

Time/phase Virtual Private Synchronization can also be provided in addition to or as an alternative to frequency Virtual Private Synchronization. Figure 4 illustrates a time/phase VPS function 20. In this example, the time/phase VPS function 20 handles packets in the AAV network from two different Service Providers, although it will be appreciated that it may handle packets for any number of Services Providers.

The exemplary time/phase VPS function 20 is provided with instances of three Packet Time Engines (PTE) 21, 22, 23. One PTE instance 23 may be used for local system time/phase synchronization, and the other two PTE instances 21, 22 are used for time/phase synchronization for Service Provider A and Service Provider B respectively. The dashed lines in Figure 4 refer to packet synchronization control frames from different Service Providers using the AAV network.

Each PTE 21, 22, 23 is associated with a Service Provider (SP) packet flow. In this example, PTE1 21 is associated with SP flow1 24, PTE2 22 is associated with SP flow2 25 and PTE3 23 is associated with SP flow 3 26. SP flow1 24 and SP flow2 25 use Ethernet Ports1 14 and Ethernet Port2 15, and SP flow3 26 uses Ethernet Port3 16 and Ethernet Port4 17.

Figure 5 illustrates an exemplary PTE instance 21. The PTE instance 21 is provided with time control 27, a time reference selector 28, a frequency reference selector 28a, a time-frequency generator 29 and a time counter 30, along with a packet synchronization frequency output. Each PTE instance 21, 22, 23 is typically used by one time/frequency VPS instance, and is therefore used for the packets relating to a single Service Provider. The frequency reference selector 28a obtains information from a source such as an Ethernet Equipment Clock (EEC), an SDH Equipment Clock (SEC), an OCXO or another type of L1 physical clock source.

The time/phase VPS function 20 has a packet switching system that classifies packet flows (shown as dark arrows in Figure 4). Each packet flow typically includes embedded packet synchronization control frames. A packet flow passes through the traffic ports, the ingress packet synchronization control frames are filtered out from the packet flow, and sent to the associated PTE instance. So, for example, the packet synchronization control frames for SP flow1 24 would be sent to PTE1 21. Egress packet synchronization control frames are subsequently sent from the associated PTE instance to be mixed with the packet flow output at the relevant traffic ports.

Each PTE instance 21 maintains independent time-counter 30. The independent time-counter 30 is used to perform time-stamping of a packet synchronization control frame alone within each customer traffic flow. The time-counter uses a reference time required by the associated Service Provider.

Note that, as illustrated in Figure 4, two flows (in this example, SP flow1 and SP flow2) use the same Ethernet Ports 14, 15. However, they use difference PTE instances 21, 22 because the flows arise from different Service Providers. Each PTE instance 21, 22 therefore provides a time stamp to the packet synchronization control frames of the packet flows that is required by the associated Service Provider.

The time/phase function 20 in the AAV node allows the AAV node in the backhaul to provide Service Provider A and Service Provider B with different packet synchronization domains for time/phase synchronization of those Service Providers packet synchronization control frames. This allows, for example, multiple instances of the types of transparent clock and boundary clock defined in IEEE1588v2 to be provided at the same AAV node running Virtual Private Synchronization of the Packet System. Note that the transparent clock is not limited to the multiple synchronization instances. Even with a single synchronization instance, there are the possibilities for the transparent clock to support multiple Service Providers.

For most communications networks, it is likely that frequency synchronization in the L1 physical synchronization domain is required, and additionally packet synchronization also requires time/phase synchronization. A typical AAV node in the backhaul will therefore have the capability of providing both frequency synchronization and time/phase synchronization. The functions shown in Figures 4, 5 and 6 can therefore be provided in a single node, although it will be appreciated that they could be provided in separate nodes. A single node is advantageous especially in the case where the L1 physical synchronization is used to drive the frequency and synchronization packet layer is used to drive the time/phase.

In this case, owing to L1 technology, frequency synchronization cannot be isolated from the same Ethernet port, so Service Provider A and Service Provider B would be required to use different Ethernet ports for the frequency, and consequently time/ phase hybrid synchronization when passing through the AAV node.

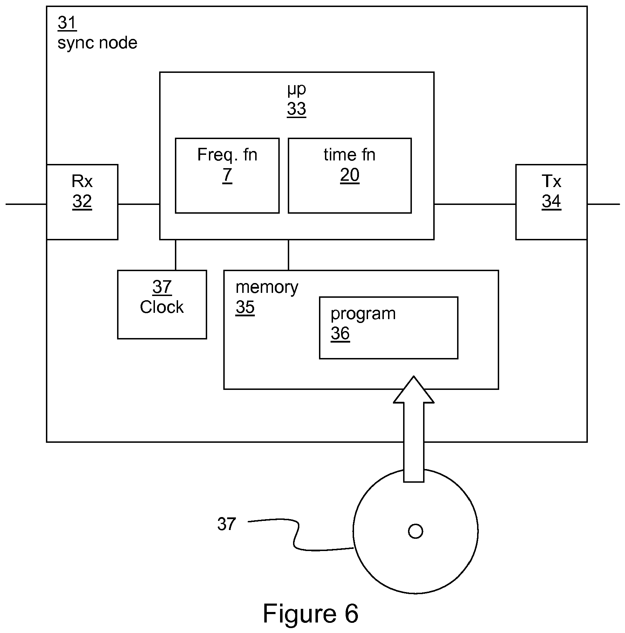

Turning to Figure 6, there is illustrated a synchronization node 31 that can provide both time/phase and frequency synchronization. The synchronization node 31 is provided with a receiver 32 for receiving packets, a processor 33 that can implement the frequency function 7 and/or the time/phase function 20, and a transmitter 34 for forwarding the packets. The synchronization node 31 provides synchronization to packets in the AAV network. The processor identifies a characteristic of the Service Provider associated with an incoming data packet (for example, by identifying an associated Ethernet Port as described above), and provides frequency and/or time/phase synchronization as required on the basis of the identified Service Provider.

The node may also be provided with a non-transitory computer readable medium in the form of a memory 35 that can store a computer program 36 which, when executed by the processor 33, causes the synchronization node 31 to behave as described above. The computer program 36 may also be provided from an external non-transitory computer readable medium 37, such as a Compact Disk.

Where a synchronization node 31 provides both frequency and time/phase synchronization, it may use one or more clocks 37 such as an OCXO-driven clock, to drive the frequency and time/phase synchronization.

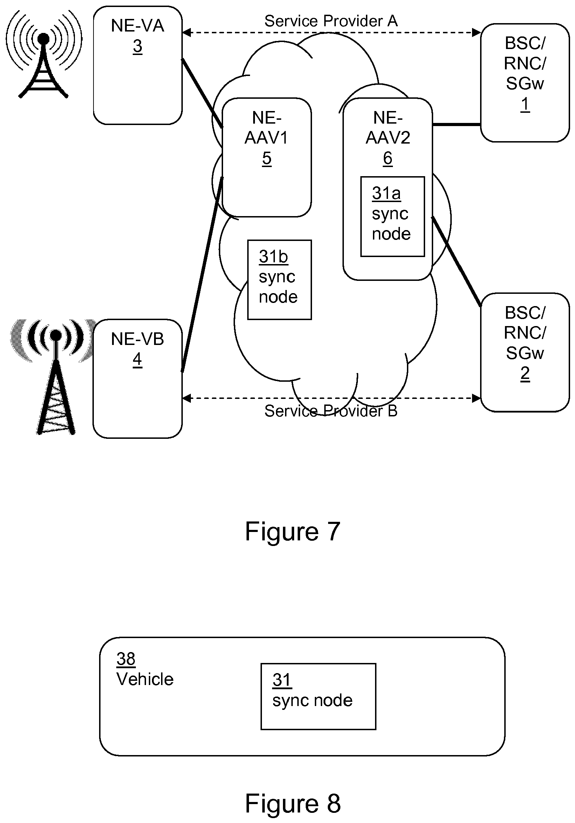

The synchronization node 31 may be a stand-alone node, or co-located in another node, such as a switch or a router, in the AAV network. Figure 7 shows a network similar to that of Figure 1. In this case, two exemplary locations of the synchronization node 31 are shown; in one embodiment, a synchronization node 31a is co-located in a Network Element AAV2 6, where AAV2 6 is a node such as a switch or a router. In another embodiment, the synchronization node 31b is a stand-alone node in the AAV network.

Note that, as illustrated in Figure 7, the synchronization node 31 may be located in a vessel or vehicle 38, examples of which are a ship, a car, a truck or train.

The methods and nodes described above allow a packet network such as the AAV network to provide different synchronization domains for different Service Providers using the AAV network. Isolated frequency domains can be provided with multiple instances dependent on the identity of the Service Provider from a single node as the frequency Virtual Private Synchronization. Similarly, the isolated time/phase domain can have multiple instances support from a single node as the time/phase Virtual Private Synchronization. In an embodiment, both frequency VPS and time/phase VPS can be provided from a single node.

It will be appreciated by the person of skill in the art that various modifications may be made to the above-described embodiments without departing from the scope of the present invention. For example, the above description refers to using Ethernet Ports to identify the Service Provider, but the Service Provider may also be determined by performing packet inspection on packets in the packet flow.

The following abbreviations have been used in the above description:
- AAV: Alternative Access Vendors
- BSC: Base Station Controller
- EEC: Ethernet Equipment Clock
- IP RAN: IP Radio Access Network
- MUX: Multiplexer
- NE: network element
- OCXO: Oven Controlled Crystal Oscillator
- OTN: Optical Transport Technology
- PDH: Plesiochronous Digital Hierarchy
- PTE: Packet-Time-Engine
- QoS: Quality of Service
- RAN: Radio Access Network
- RNC: Radio Network Controller
- SDH: Synchronous Digital Hierarchy
- SEC: SDH Equipment Clock
- SGw: Serving Gateway
- SONET: Synchronous Optical Networking
- VPN: Virtual Private Network
- VPS: Virtual Private Synchronization

## Claims

1. A method of providing packet synchronization in a Virtual Private Network, the method comprising, at a node providing backhaul service to a plurality of Service Providers in the Virtual Private Network:
receiving (S1) a synchronization control packet;
identifying (S2) a characteristic relating to the identity of a Service Provider of the plurality of Service Providers, wherein the step of identifying the characteristic relating to the identity of the Service Provider comprises identifying (S3) an Ethernet port at which the synchronization control packet was received;
providing (S4; S8) synchronization information to the node on the basis of the identified characteristic;
using (S4) a multiple output clock, each output providing a frequency synchronization according to the identified characteristic of the Service Provider
handling (S5; S9) subsequent packets associated with the identified Service Provider using the synchronization information;
for each Service Provider of the plurality of service Providers,
providing (S6) a packet time engine instance, each packet time engine instance arranged to provide time and phase synchronization specific to the Service Provider; and
for the synchronization control packet, identifying the Service Provider associated with the synchronization control packet;
determining (S7) the packet time engine instance associated with the identified Service Provider; and
using (S8) any of the time and phase data from the packet time engine instance to synchronize the node.

2. The method according to claim 1, further comprising performing the method on any of a vessel and a vehicle (35).

3. A node (31) for providing packet synchronization in a Virtual Private Network providing backhaul service to a plurality of Service Providers, the node comprising:
a receiver (32) arranged to receive a synchronization control packet;
a processor (33) arranged to identify a characteristic relating to the identity of a Service Provider of the plurality of Service Providers wherein the processor (33) is arranged to identify the characteristic relating to the identity of the Service Provider by identifying an Ethernet port at which the synchronization control packet was received;
a multiple output clock (8), each output arranged to provide a frequency synchronization according to the identified characteristic of the Service Provider;
the processor (33) being further arranged to provide synchronization information on the basis of the identified characteristic;
the processor (33) being further arranged to handle subsequent packets associated with the identified Service Provider using the synchronization information and wherein the node comprising
plurality of packet time engine instances (21, 22, 23), each packet time engine instance (21, 22, 23) being associated with a Service Provider and being arranged to provide time and phase data specific to the associated Service Provider; and
the processor (33) is further arranged to identify the Service Provider associated with the synchronization control packet, determine the packet time engine instance (21) associated with the identified Service Provider, and use any of the time and phase data from the clock instance to synchronize the node.

4. The node according to claim 3, wherein the node comprises any of a router node and a switch node.

5. A computer program (36), comprising computer readable code which, when run on a node (31) in a communications network, causes the node to perform the method as claimed in any one of claims 1 or 2.

6. A computer program product comprising a computer readable medium (35; 37) and a computer program (36) which, when run on a node (31) in a communications network, causes the node to perform the method as claimed in any one of claims 1 or 2, wherein the computer program is stored on the computer readable medium.

7. A vessel or vehicle (38) comprising the node (31) according to any of claim 3 or 4.

## Patentansprüche

1. Verfahren zum Bereitstellen von Paketsynchronisation in einem virtuellen privaten Netzwerk (Virtual Private Network), wobei das Verfahren an einem Knoten einen Backhaul-Dienst für eine Vielzahl von Dienstanbietern in dem virtuellen privaten Netzwerk bereitstellt:
Empfangen (S1) eines Synchronisationssteuerpakets;
Identifizieren (S2) eines Merkmals, das sich auf die Identität eines Dienstanbieters der Vielzahl von Dienstanbietern bezieht, wobei der Schritt des Identifizierens des Merkmals, das sich auf die Identität des Dienstanbieters bezieht, das Identifizieren (S3) eines Ethernet-Ports umfasst, an dem das Synchronisationssteuerpaket empfangen wurde;
Bereitstellen (S4; S8) von Synchronisationsinformationen für den Knoten auf der Basis des identifizierten Merkmals;
Verwenden (S4) eines Taktgebers mit mehreren Ausgängen, wobei jeder Ausgang eine Frequenzsynchronisation gemäß dem identifizierten Merkmal des Dienstanbieters bereitstellt;
Handhaben (S5; S9) von nachfolgenden Paketen, die unter Verwendung der Synchronisierungsinformationen dem identifizierten Dienstanbieter zugeordnet sind;
für jeden Dienstanbieter aus der Vielzahl von Dienstanbietern, Bereitstellen (S6) einer Paketzeit-Engine-Instanz, wobei jede Paketzeit-Engine-Instanz dazu angeordnet ist, eine für den Dienstanbieter spezifische Zeit- und Phasensynchronisation bereitzustellen; und
für das Synchronisationskontrollpaket, Identifizieren des Dienstanbieters, der dem Synchronisationskontrollpaket zugeordnet ist;
Bestimmen (S7) der Paketzeit-Engine-Instanz, die dem identifizierten Dienstanbieter zugeordnet ist; und
Verwenden (S8) beliebiger Zeit- und Phasendaten aus der Paketzeit-Engine-Instanz zum Synchronisieren des Knotens.

2. Verfahren nach Anspruch 1, ferner umfassend die Durchführung des Verfahrens an einem von einem Schiff oder einem Fahrzeug (35).

3. Knoten (31) zum Bereitstellen von Paketsynchronisation in einem virtuellen privaten Netzwerk, das einen Backhaul-Dienst für eine Vielzahl von Dienstanbietern bereitstellt, wobei der Knoten umfasst:
einen Empfänger (32), der dazu angeordnet ist, ein Synchronisationskontrollpaket zu empfangen;
einen Prozessor (33), der dazu angeordnet ist, ein Merkmal zu identifizieren, das sich auf die Identität eines Dienstanbieters der Vielzahl von Dienstanbietern bezieht, wobei der Prozessor (33) dazu angeordnet ist, das Merkmal, das sich auf die Identität des Dienstanbieters bezieht, durch Identifizieren eines Ethernet-Ports, an dem das Synchronisationssteuerpaket empfangen wurde, zu identifizieren;
einen Taktgeber mit mehreren Ausgängen (8), wobei jeder Ausgang dazu angeordnet ist, eine Frequenzsynchronisation gemäß dem identifizierten Merkmal des Dienstanbieters bereitzustellen;
wobei der Prozessor (33) ferner dazu angeordnet ist, Synchronisationsinformationen auf der Basis des identifizierten Merkmals bereitzustellen;
wobei der Prozessor (33) ferner dazu angeordnet ist, nachfolgende Pakete, die dem identifizierten Dienstanbieter zugeordnet sind, unter Verwendung der Synchronisationsinformationen zu handhaben, und wobei der Knoten umfasst:
eine Vielzahl von Paketzeit-Engine-Instanzen (21, 22, 23), wobei jede Paketzeit-Engine-Instanz (21, 22, 23) einem Dienstanbieter zugeordnet und so angeordnet ist, dass sie Zeit- und Phasendaten bereitstellt, die für den zugeordneten Dienstanbieter spezifisch sind; und
der Prozessor (33) ferner dazu angeordnet ist, den mit dem Synchronisationssteuerpaket verbundenen Dienstanbieter zu identifizieren, die mit dem identifizierten Dienstanbieter verbundene Paketzeit-Engine-Instanz (21) zu bestimmen und eine der Zeit- und Phasendaten von der Taktinstanz zu verwenden, um den Knoten zu synchronisieren.

4. Knoten nach Anspruch 3, wobei der Knoten eines von einem Router-Knoten und einem Switch-Knoten umfasst.

5. Computerprogramm (36), umfassend computerlesbaren Code, der, wenn er auf einem Knoten (31) in einem Kommunikationsnetz ausgeführt wird, bewirkt, dass der Knoten das Verfahren nach einem der Ansprüche 1 oder 2 ausführt.

6. Computerprogrammprodukt, umfassend ein computerlesbares Medium (35; 37) und ein Computerprogramm (36), das, wenn es auf einem Knoten (31) in einem Kommunikationsnetz ausgeführt wird, bewirkt, dass der Knoten das Verfahren nach einem der Ansprüche 1 oder 2 durchführt, wobei das Computerprogramm auf dem computerlesbaren Medium gespeichert ist.

7. Wasserfahrzeug oder Fahrzeug (38), das den Knoten (31) nach einem der Ansprüche 3 oder 4 umfasst.

## Revendications

1. Procédé de fourniture d'une synchronisation de paquet dans un réseau privé virtuel, le procédé comprenant, au niveau d'un nœud fournissant un service de liaison terrestre à une pluralité de fournisseurs de services dans le réseau privé virtuel :
la réception (S1) d'un paquet de commande de synchronisation ;
l'identification (S2) d'une caractéristique se rapportant à l'identité d'un fournisseur de services de la pluralité de fournisseurs de services, dans lequel l'étape d'identification de la caractéristique se rapportant à l'identité du fournisseur de services comprend l'identification (S3) d'un port Ethernet au niveau duquel le paquet de commande de synchronisation a été reçu ;
la fourniture (S4 ; S8) d'informations de synchronisation au nœud sur la base de la caractéristique identifiée ;
l'utilisation (S4) d'une horloge à sorties multiples, chaque sortie fournissant une synchronisation de fréquence selon la caractéristique identifiée du fournisseur de services le traitement (S5 ; S9) de paquets ultérieurs associés au fournisseur de services identifié en utilisant les informations de synchronisation ;
pour chaque fournisseur de services de la pluralité de fournisseurs de services,
la fourniture (S6) d'une instance de moteur de temps de paquet, chaque instance de moteur de temps de paquet agencée pour fournir une synchronisation de temps et de phase spécifique du fournisseur de services ; et
pour le paquet de commande de synchronisation, l'identification du fournisseur de services associé au paquet de commande de synchronisation ;
la détermination (S7) de l'instance de moteur de temps de paquet associée au fournisseur de services identifié ; et l'utilisation (S8) de l'une quelconque des données de temps et de phase provenant de l'instance de moteur de temps de paquet pour synchroniser le nœud.

2. Procédé selon la revendication 1, comprenant en outre la mise en œuvre du procédé sur l'un quelconque parmi un navire et un véhicule (35).

3. Nœud (31) pour fournir une synchronisation de paquet dans un réseau privé virtuel fournissant un service de liaison terrestre à une pluralité de fournisseurs de services, le nœud comprenant :
un récepteur (32) agencé pour recevoir un paquet de commande de synchronisation ;
un processeur (33) agencé pour identifier une caractéristique se rapportant à l'identité d'un fournisseur de services de la pluralité de fournisseurs de services dans lequel le processeur (33) est agencé pour identifier la caractéristique se rapportant à l'identité du fournisseur de services en identifiant un port Ethernet au niveau duquel le paquet de commande de synchronisation a été reçu ;
une horloge à sorties multiples (8), chaque sortie agencée pour fournir une synchronisation de fréquence selon la caractéristique identifiée du fournisseur de services ;
le processeur (33) étant agencé en outre pour fournir des informations de synchronisation sur la base de la caractéristique identifiée ;
le processeur (33) étant agencé en outre pour traiter des paquets ultérieurs associés au fournisseur de services identifié en utilisant les informations de synchronisation et dans lequel le nœud comprend
une pluralité d'instances de moteur de temps de paquet (21, 22, 23), chaque instance de moteur de temps de paquet (21, 22, 23) étant associée à un fournisseur de services et étant agencée pour fournir des données de temps et de phase spécifiques du fournisseur de services associé ; et
le processeur (33) est en outre agencé pour identifier le fournisseur de services associé au paquet de commande de synchronisation, déterminer l'instance de moteur de temps de paquet (21) associée au fournisseur de services identifié, et utiliser l'une quelconque des données de temps et de phase provenant de l'instance d'horloge pour synchroniser le nœud.

4. Nœud selon la revendication 3, dans lequel le nœud comprend l'un quelconque parmi un nœud de routeur et un nœud de commutateur.

5. Programme informatique (36), comprenant un code lisible par ordinateur qui, lorsqu'il est exécuté sur un nœud (31) dans un réseau de communications, amène le nœud à mettre en œuvre le procédé selon l'une quelconque des revendications 1 ou 2.

6. Produit programme informatique comprenant un support lisible par ordinateur (35 ; 37) et un programme informatique (36) qui, lorsqu'il est exécuté sur un nœud (31) dans un réseau de communications, amène le nœud à mettre en œuvre le procédé selon l'une quelconque des revendications 1 ou 2, dans lequel le programme informatique est stocké sur le support lisible par ordinateur.

7. Navire ou véhicule (38) comprenant le nœud (31) selon l'une quelconque des revendications 3 ou 4.
